# FASCICULE DE BREVET EUROPEEN

(11) **EP 2 439 127 B1**
(45) Date de publication et mention de la délivrance du brevet: **22.01.2014**
(21) Numéro de dépôt: 11182873.7
(22) Date de dépôt: 27.09.2011
(51) Int. Cl.: B62D 13/06, B62D 15/02

(54) **Système d'assistance au recul d'un véhicule tracteur à roues avant directrices auquel est attelé un véhicule à tracter**
Servosystem für den Abstand eines Zugfahrzeugs mit Frontantrieb, an das ein Anhänger angehängt ist
System for reversing assistance of a towing vehicle with front steering wheels with which a trailer vehicle is coupled

(30) Priorité: 08.10.2010 FR 1058173
(43) Date de publication de la demande: 11.04.2012
(73) Titulaire: Jtekt Europe, 69540 Irigny (FR)
(72) Inventeur: Pantale, David, 69126 Brindas (FR)
(74) Mandataire: Chevalier, Renaud Philippe

(56) Documents cités:
- WO-A2-2007/127967
- DE-A1- 10 325 192
- DE-A1-102006 059 082
- DE-A1-102007 029 413

## Description

La présente invention se rapporte à un système d'assistance au recul d'un véhicule tracteur auquel est attelé un véhicule à tracter ainsi qu'à un procédé d'assistance au recul d'un véhicule tracteur auquel est attelé un véhicule à tracter.

Par « véhicule à tracter », on entend un véhicule notamment de type caravane ou remorque.

Par « véhicule tracteur », on entend un véhicule adapté pour tracter un véhicule à tracter.

Il est très difficile, pour un conducteur d'un véhicule tracteur, de reculer lorsqu'un véhicule à tracter est attelé au véhicule tracteur. En effet, le conducteur doit continuellement corriger la trajectoire du véhicule à tracter en agissant sur les roues directrices du véhicule tracteur.

Par ailleurs, il est de plus en plus courant d'équiper un véhicule tracteur d'un dispositif d'assistance au stationnement. Lorsqu'un véhicule à tracter est attelé au véhicule tracteur, un tel dispositif d'assistance au stationnement est alors rendu inopérant.

De tels systèmes sont décrits dans DE 103 25 192 A1 et DE 10 2007 029 413 A1 selon le préamble de la revendication 1.

La présente invention vise à remédier aux inconvénients précités et concerne un système d'assistance au recul d'un véhicule tracteur auquel est attelé un véhicule à tracter, le véhicule tracteur présentant des roues avant directrices, le système d'assistance au recul étant remarquable en ce qu'il comporte :
- des moyens de détermination de la position angulaire du véhicule à tracter relativement au véhicule tracteur, les moyens de détermination étant configurés pour délivrer un signal dit de contrôle contenant ladite position angulaire,
- un dispositif d'assistance au stationnement du véhicule tracteur comprenant :
   un actionneur de direction des roues avant directrices du véhicule tracteur,
   des moyens de commande de l'actionneur agencés pour recevoir le signal de contrôle,
   les moyens de commande étant configurés pour délivrer à l'actionneur un angle de braquage déterminé selon le signal de contrôle de manière à maintenir le véhicule tracteur et le véhicule à tracter suivant une direction sensiblement rectiligne.

Ainsi, un tel système d'assistance au recul selon l'invention permet de maintenir le véhicule tracteur et le véhicule à tracter suivant une direction sensiblement rectiligne lors du recul en ligne droite du véhicule tracteur, de sorte que le conducteur du véhicule tracteur n'a plus à continuellement corriger la trajectoire du véhicule à tracter en agissant sur les roues directrices du véhicule tracteur.

En outre, un tel système d'assistance au recul permet de limiter les coûts de fabrication en utilisant le dispositif d'assistance au stationnement prééquipant le véhicule tracteur.

Dans un mode de réalisation, le système d'assistance au recul comporte un organe d'activation des moyens de commande destiné à équiper le véhicule tracteur, l'organe d'activation présentant un état dit activé dans lequel les moyens de commande sont actifs, et un état dit désactivé dans lequel les moyens de commande sont inactifs.

Ainsi, un tel organe d'activation permet au conducteur du véhicule tracteur d'activer les moyens de commande lorsque le conducteur souhaite bénéficier d'une assistance au recul en ligne droite, et de désactiver les moyens de commande notamment lors d'un recul en courbe.

Selon une forme d'exécution, les moyens de détermination comportent :
- des moyens de télémétrie conçus pour émettre et recevoir au moins une paire de signaux télémétriques, les moyens de télémétrie étant destinés à équiper le véhicule tracteur, le véhicule à tracter étant adapté pour réfléchir la ou les paires de signaux télémétriques,
- des moyens de traitement de la ou des paires de signaux télémétriques réfléchis par le véhicule à tracter et reçus par les moyens de télémétrie,
- des moyens de calcul conçus pour calculer la position angulaire du véhicule à tracter relativement au véhicule tracteur à partir de la ou des paires de signaux télémétriques traités par les moyens de traitement, les moyens de calcul étant configurés pour délivrer le signal de contrôle contenant ladite position angulaire.

Selon une variante d'exécution, les moyens de détermination comportent au moins un capteur angulaire agencé pour déterminer la position angulaire du véhicule à tracter relativement au véhicule tracteur, le ou les capteurs angulaires étant configurés pour délivrer le signal de contrôle contenant ladite position angulaire.

Ainsi, de tels moyens de détermination permettent de déterminer directement la position angulaire du véhicule à tracter relativement au véhicule tracteur au sens où le ou les capteurs angulaires fournissent des mesures directes de ladite position angulaire.

La présente invention se rapporte également à un procédé d'assistance au recul d'un véhicule tracteur auquel est attelé un véhicule à tracter, le véhicule tracteur présentant des roues avant directrices, le procédé étant remarquable en ce qu'il comporte les étapes consistant à :
a) déterminer la position angulaire du véhicule à tracter relativement au véhicule tracteur,
b) délivrer un signal dit de contrôle contenant ladite position angulaire,
c) prévoir un dispositif d'assistance au stationnement du véhicule tracteur comprenant :
   - un actionneur de direction des roues avant directrices du véhicule tracteur,
   - des moyens de commande de l'actionneur,
d) agencer les moyens de commande pour recevoir le signal de contrôle,
e) configurer les moyens de commande pour délivrer à l'actionneur un angle de braquage déterminé selon le signal de contrôle de manière à maintenir le véhicule tracteur et le véhicule à tracter suivant une direction sensiblement rectiligne.

Selon un mode de mise en oeuvre, l'étape a) comporte une étape consistant à agencer au moins un capteur angulaire de manière à déterminer directement la position angulaire du véhicule à tracter relativement au véhicule tracteur, et en ce que l'étape b) comporte une étape consistant à configurer le ou les capteurs angulaires pour délivrer le signal de contrôle.

Ainsi, la position angulaire du véhicule à tracter relativement au véhicule tracteur est déterminée directement au sens où le ou les capteurs angulaires fournissent des mesures directes de ladite position angulaire.

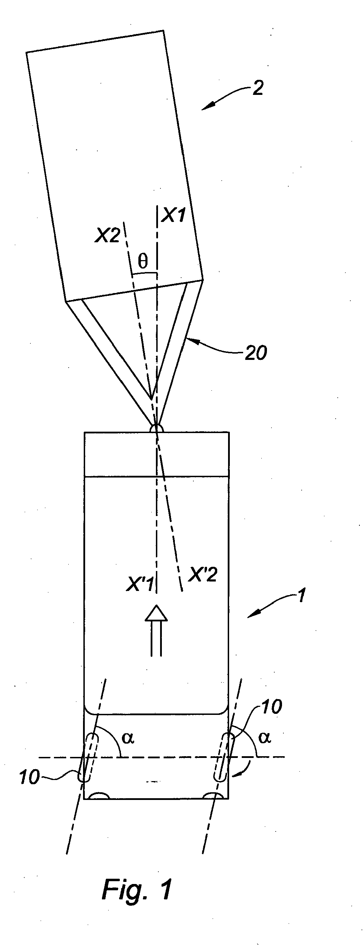

D'autres caractéristiques et avantages apparaîtront dans la description qui va suivre d'un mode de réalisation d'un système d'assistance au recul selon l'invention, donné à titre d'exemple non limitatif, en référence aux dessins annexés dans lesquels la figure 1 est une vue schématique de dessus d'un système d'assistance au recul selon l'invention.

Le système d'assistance au recul illustré à la figure 1 est un système d'assistance au recul d'un véhicule tracteur 1 auquel est attelé un véhicule à tracter 2 par un timon d'attelage 20.

Le véhicule tracteur 1 présente des roues avant 10 directrices. Le véhicule tracteur 1 présente un axe médian longitudinal X'1-X1. Le véhicule à tracter 2 présente un axe médian longitudinal X'2-X2.

Le système d'assistance au recul comporte des moyens de détermination de la position angulaire du véhicule à tracter 2 relativement au véhicule tracteur 1. La position angulaire est définie par l'angle θ formé par l'axe médian longitudinal X'1-X1 du véhicule tracteur 1 et l'axe médian longitudinal X'2-X2 du véhicule à tracter.

Les moyens de détermination sont configurés pour délivrer un signal dit de contrôle contenant ladite position angulaire. Le signal de contrôle contient ainsi l'information sur la valeur instantanée de l'angle θ.

Le système d'assistance au recul comporte en outre un dispositif d'assistance au stationnement (non représenté) du véhicule tracteur 1 comprenant :
- un actionneur (non représenté) de direction des roues avant 10 directrices du véhicule tracteur 1,
- des moyens de commande de l'actionneur agencés pour recevoir le signal de contrôle.

Les moyens de commande sont configurés pour délivrer à l'actionneur un angle de braquage α déterminé selon le signal de contrôle de manière à maintenir le véhicule tracteur 1 et le véhicule à tracter 2 suivant une direction sensiblement rectiligne.

Le système d'assistance au recul comporte en outre un organe d'activation (non représenté) des moyens de commande équipant le véhicule tracteur 1, par exemple sur le tableau de bord.

L'organe d'activation présente un état dit activé dans lequel les moyens de commande sont actifs, et un état dit désactivé dans lequel les moyens de commande sont inactifs.

Ainsi, un tel organe d'activation permet au conducteur du véhicule tracteur 1 d'activer les moyens de commande lorsque le conducteur souhaite bénéficier d'une assistance au recul en ligne droite, et de désactiver les moyens de commande notamment lors d'un recul en courbe.

Selon l'invention, les moyens de détermination comportent :
- des moyens de télémétrie du type ultrasons, conçus pour émettre et recevoir au moins une paire de signaux télémétriques, les moyens de télémétrie étant destinés à équiper le véhicule tracteur 1, le véhicule à tracter 2 étant adapté pour réfléchir la ou les paires de signaux télémétriques,
- des moyens de traitement de la ou des paires de signaux télémétriques réfléchis par le véhicule à tracter 2 et reçus par les moyens de télémétrie,
- des moyens de calcul, tels que le calculateur central du véhicule tracteur 1, conçus pour calculer la position angulaire du véhicule à tracter 1 relativement au véhicule tracteur 1 à partir de la ou des paires de signaux télémétriques traités par les moyens de traitement, les moyens de calcul étant configurés pour délivrer le signal de contrôle contenant ladite position angulaire.

Selon une variante d'exécution non représentée, les moyens de détermination comportent au moins un capteur angulaire agencé pour déterminer la position angulaire du véhicule à tracter 2 relativement au véhicule tracteur 1, le ou les capteurs angulaires étant configurés pour délivrer le signal de contrôle contenant ladite position angulaire.

Bien entendu, le mode de réalisation de l'invention décrit ci-dessus ne présente aucun caractère limitatif. Des détails et améliorations peuvent y être apportés dans d'autres variantes d'exécution sans pour autant sortir du cadre de l'invention.

## Revendications

1. Système d'assistance au recul d'un véhicule tracteur (1) auquel est attelé un véhicule à tracter (2), le véhicule tracteur (1) présentant des roues avant (10) directrices, le système d'assistance au recul comportant :
- des moyens de détermination de la position angulaire (θ) du véhicule à tracter (2) relativement au véhicule tracteur (1), les moyens de détermination étant configurés pour délivrer un signal dit de contrôle contenant ladite position angulaire (θ),
- un dispositif d'assistance au stationnement du véhicule tracteur (1) comprenant :
un actionneur de direction des roues avant (10) directrices du véhicule tracteur (1),
des moyens de commande de l'actionneur agencés pour recevoir le signal de contrôle,
les moyens de commande étant configurés pour délivrer à l'actionneur un angle de braquage (α) déterminé selon le signal de contrôle de manière à maintenir le véhicule tracteur (1) et le véhicule à tracter (2) suivant une direction sensiblement rectiligne, le système d'assistance étant **caractérisé en ce que** les moyens de détermination comportent :
- des moyens de télémétrie de type ultrasons conçus pour émettre et recevoir au moins une paire de signaux télémétriques, les moyens de télémétrie étant destinés à équiper le véhicule tracteur, le véhicule à tracter étant adapté pour réfléchir la ou les paires de signaux télémétriques,
- des moyens de traitement de la ou des paires de signaux télémétriques réfléchis par le véhicule à tracter (2) et reçus par les moyens de télémétrie,
- des moyens de calcul conçus pour calculer la position angulaire (θ) du véhicule à tracter (2) relativement au véhicule tracteur (1) à partir de la ou des paires de signaux télémétriques traités par les moyens de traitement, les moyens de calcul étant configurés pour délivrer le signal de contrôle contenant ladite position angulaire (θ).

2. Système d'assistance au recul selon la revendication 1, **caractérisé en ce qu'**il comporte un organe d'activation des moyens de commande destiné à équiper le véhicule tracteur (1), l'organe d'activation présentant un état dit activé dans lequel les moyens de commande sont actifs, et un état dit désactivé dans lequel les moyens de commande sont inactifs.

## Patentansprüche

1. Servosystem für den Abstand eines Zugfahrzeugs (1), an das ein Anhänger (2) angehängt ist, wobei das Zugfahrzeug (1) Frontantrieb (10) aufweist, wobei das Servosystem für den Abstand aufweist:
- Bestimmungsmittel der Winkelposition (θ) des Anhängers (2) relativ zum Zugfahrzeug (1), wobei die Bestimmungsmittel konfiguriert sind, um ein Kontrollsignal bereitzustellen, das die Winkelposition (θ) enthält,
- eine Servovorrichtung für das Parken des Zugfahrzeugs (1), die umfasst:
einen Lenkaktuator des Frontantriebs (10) des Zugfahrzeugs (1),
Steuermittel des Aktuators, die ausgebildet sind, um das Kontrollsignal zu empfangen,
wobei die Steuermittel konfiguriert sind, um dem Aktuator einen gemäß dem Kontrollsignal bestimmten Lenkwinkel (α) derart bereitzustellen, dass das Zugfahrzeug (1) und der Anhänger (2) in einer etwa geraden Richtung gehalten werden, wobei das Servosystem **dadurch gekennzeichnet ist, dass** die Bestimmungsmittel aufweisen:
- Telemetriemittel vom Typ Ultraschall, die ausgebildet sind, um mindestens ein Paar Telemetriesignale zu senden und zu empfangen, wobei die Telemetriemittel dazu bestimmt sind, das Zugfahrzeug auszurüsten, wobei der Anhänger geeignet ist, das oder die Telemetriesignalpaare zu reflektieren,
- Verarbeitungsmittel des oder der von dem Anhänger (2) reflektierten und von den Telemetriemitteln empfangenen Telemetriesignalpaaren,
- Berechnungsmittel, die ausgebildet sind, um die Winkelposition (θ) des Anhängers (2) relativ zum Zugfahrzeug (1) ausgehend von dem oder den von den Verarbeitungsmitteln verarbeiteten Telemetriesignalpaaren zu berechnen, wobei die Berechnungsmittel konfiguriert sind, um das Kontrollsignal, das die Winkelposition (θ) enthält, bereitzustellen.

2. Servosystem für den Abstand nach Anspruch 1, **dadurch gekennzeichnet, dass** es ein Aktivierungsorgan der Steuermittel aufweist, das dazu bestimmt ist, das Zugfahrzeug (1) auszurüsten, wobei das Aktivierungsorgan einen aktivierten Zustand aufweist, in dem die Steuermittel aktiv sind, und einen deaktivierten Zustand, in dem die Steuermittel inaktiv sind.

## Claims

1. A backup assistance system for a tractive vehicle (1) to which a vehicle to be pulled (2) is hitched, the tractive vehicle (1) having front steering wheels (10), the backup assistance system including:
- means for determining the angular position (θ) of the vehicle to be pulled (2) relative to the tractive vehicle (1), the determining means being configured to deliver a so-called control signal containing said angular position (θ),
- a parking assistance device for the tractive vehicle (1) comprising:
a steering actuator for the front steering wheels (10) of the tractive vehicle (1),
control means for the actuator arranged to receive the control signal,
the control means being configured to deliver a turning angle (α) to the actuator determined based on the control signals so as to keep the tractive vehicle (1) and the vehicle to be pulled (2) in a substantially rectilinear direction, the assistance system being **characterized in that** the determining means include:
- telemetry means of the ultrasound type designed to send and receive at least one pair of electric signals, the telemetry means being designed to equip the tractive vehicle, the vehicle to be pulled being suitable for reflecting the pair(s) of electric signals,
- means for processing the pair(s) of telemetric signals reflected by the vehicle to be pulled (2) and received by the telemetry means,
- computation means designed to compute the angular position (θ) of the vehicle to be pulled (2) relative to the tractive vehicle (1) from the pair(s) of telematics signals processed by the processing means, the computation means being configured to deliver the control signal containing said angular position (θ).

2. The backup assistance system according to claim 1, **characterized in that** it includes a member for activating control means capable of equipping the tractive vehicle (1), the activating member having a so-called activated state in which the control means are active, and a so-called deactivated state in which the control means are inactive.
